# EUROPÄISCHE PATENTSCHRIFT

(11) **EP 0 683 851 B1**
(45) Veröffentlichungstag und Bekanntmachung des Hinweises auf die Patenterteilung: **16.04.1997**
(21) Anmeldenummer: 94905018.1
(22) Anmeldetag: 10.01.1994
(51) Int. Cl.: F01N 3/28

(54) **IN EINEM INNEREN UND EINEM ÄUSSEREN MANTELROHR GEHALTERTER METALLISCHER WABENKÖRPER, INSBESONDERE KATALYSATOR-TRÄGERKÖRPER**
METALLIC HONEYCOMB STRUCTURE SUPPORTED IN AN INNER AND AN OUTER CASING TUBE, ESPECIALLY A CATALYST SUPPORT
ELEMENT METALLIQUE ALVEOLE MAINTENU DANS UN TUBE DE PROTECTION INTERIEUR ET EXTERIEUR, NOTAMMENT ELEMENT-SUPPORT DE CATALYSEUR

(30) Priorität: 10.02.1993 DE 4303950
(43) Veröffentlichungstag der Anmeldung: 29.11.1995
(73) Patentinhaber: Emitec Gesellschaft für Emissionstechnologie mbH, 53797 Lohmar (DE)
(72) Erfinder: BESTENREINER, Georg, D-51503 Rösrath (DE)
(74) Vertreter: Kahlhöfer, Hermann, Dipl.-Phys.
(86) Internationale Anmeldenummer: EP9400045
(87) Internationale Veröffentlichungsnummer: WO9418441

(56) Entgegenhaltungen:
- US-A- 3 854 888
- US-A- 4 795 615
- US-A- 5 079 210
- US-A- 5 104 627
- PATENT ABSTRACTS OF JAPAN vol. 15, no. 73 (M-1084)20. Februar 1991 & JP,A,02 298 620 (KONO TAKUO) 11. Dezember 1990
- PATENT ABSTRACTS OF JAPAN vol. 16, no. 190 (C-937)8. Mai 1992 & JP,A,04 027 443 (ISHIKAWA YASUSHI) 30. Januar 1990

## Beschreibung

Die vorliegende Erfindung betrifft einen metallischen Wabenkörper, insbesondere Katalysator-Trägerkörper für Kraftfahrzeuge mit Verbrennungsmotor, mit Wänden, die eine Vielzahl von für ein Fluid durchströmbaren Kanälen bilden, wobei der Wabenkörper eine Länge hat und in mindestens einem inneren und einem äußeren Mantelrohr angeordnet und gehaltert ist.

Metallische Wabenkörper, insbesondere als Katalysator-Trägerkörper für Abgasanlagen von Kraftfahrzeugen, sind in einer Vielzahl von Ausführungen aus dem Stand der Technik bekannt, beispielsweise aus der EP 0 245 7373 B1, EP 0 430 945 B1 oder der US-PS 4,795,615. Typischerweise sind solche metallischen Wabenkörper aus Lagen strukturierter Bleche hergestellt, wobei es spiralige, gestapelte und anderweitig geschichtete und verschlungene Bauformen gibt. Auf die genaue Bauform der Wabenkörper kommt es bei der vorliegenden Erfindung nicht besonders an, da diese für alle Bauformen verwendbar ist. Auch für aus metallischem Material extrudierte Wabenkörper ist die Erfindung einsetzbar.

In der JP 40 27 443 ist ein Wabenkörper beschrieben, der in einem Mantelrohr gehaltert ist. Das Mantelrohr ist dabei länger als der Wabenkörper. Um diesen lagemäßig definiert im Mantelrohr befestigen zu können, wird zuerst eine Zwischenfläche mit dem Wabenkörper verbunden, anschließend der Wabenkörper in das Mantelrohr an eine gewünschte Position gebracht und schließlich die Zwischenfläche mit dem Mantelrohr in demjenigen Bereich verbunden, der über den Wabenkörper hinausragt.

Aus der US-PS 5,173,267 ist es auch bereits bekannt, solche Wabenkörper in einem Doppelmantelsystem zu haltern, um den Wabenkörper vom äußeren Mantelrohr thermisch und mechanisch abzukoppeln und diesem eine freie Längendehnung zu ermöglichen. In diesem Dokument, von dem die vorliegende Erfindung ausgeht, ist ein Ende des inneren Mantelrohres mit einem Ende des äußeren Mantelrohtes fügetechnisch verbunden, während das andere weit in das äußere Mantelrohr hineinragende andere Ende des inneren Mantelrohres in einem Schiebesitz gehaltert wird. Diese Anordnung ist für großvolumige Katalysatoren besonders geeignet und für viele Anwendungsfälle gut einsetzbar, jedoch erfordert sie fertigungstechnisch einen gewissen Aufwand und die Einhaltung enger Toleranzen für den Schiebesitz.

Aufgabe der vorliegenden Erfindung ist die Schaffung eines Wabenkörpers, der in einem System aus mindesten einem inneren und einem äußeren Mantelrohr angeordnet und gehaltert ist, der eine gute thermische und mechanische Entkopplung zwischen dem Wabenkörper und dem äußeren Mantelrohr aufweist und trotzdem unter hohen Belastungen dauerhaltbar sowie einfach herstellbar ist.

Zur Lösung dieser Aufgabe dient ein metallischer Wabenkörper, insbesondere Katalysator-Trägerkörper für Kraftfahrzeuge mit Verbrennungsmotor, mit Wänden die eine Vielzahl von für ein Fluid durchströmbaren Kanälen bilden, wobei der Wabenkörper eine Länge hat, und in mindestens einem inneren und mit radialem Abstand in einem äußeren Mantelrohr angeordnet und gehaltert ist, wobei das innere Mantelrohr insgesamt eine größere Länge als die Länge des Wabenkörpers aufweist und in mindestens drei Teilbereiche unterteilt ist, nämlich einen ersten im wesentlichen nur entlang eines Teilstückes der Länge des Wabenkörpers an diesem außen anliegenden Teilbereich, einen zweiten sich konisch erweiternden Teilbereich und einen dritten innen an dem äußeren Mantelrohr anliegenden Teilbereich. Eine solche gekröpfte Form des inneren Mantelrohres führt dazu, daß der Wabenkörper außer an der Stelle des zweiten Teilbereiches überall thermisch von dem äußeren Mantelrohr abgekoppelt ist, da der entstehende Luftspalt eine gute Isolierung bildet. Auch ist der Wabenkörper in allen Richtungen frei längendehnbar und er wird von mechanischen Belastungen, beispielsweise Biegebelastungen des äußeren Mantelrohres nicht beeinflußt. Die Bauform des inneren Mantelrohres läßt sich bezüglich der Länge ihrer einzelnen Abschnitte und bezüglich des Öffnungswinkels des zweiten Teilbereiches vielen verschiedenen Gegebenheiten anpassen, ohne daß die Herstellung eines solchen gekröpften Mantelrohres besonders aufwendig ist.

Insbesondere kann das innere Mantelrohr in dem ersten Teilbereich mit dem Wabenkörper durch Hartlöten verbunden sein, was bevorzugt in einer mindestens 5 mm breiten Zone seines inneren Umfangs erfolgen kann. Unterschiedliche thermische Dehnungen des Wabenkörpers und des inneren Mantelrohres werden dadurch reduziert, so daß sich auch nur geringe Spannungen zwischen beiden einstellen. Das ist besonders bei langen Trägern von Vorteil.

Der dritte Teilbereich hat bevorzugt eine Länge von mehr als 10 mm, insbesondere aber von mehr als einem Drittel der Länge des Wabenkörpers. Auf diese Weise kann das innere Mantelrohr mit einer genauen Führung in ein äußeres Mantelrohr bei der Montage eingesetzt werden und die Position des Wabenkörpers konzentrisch im Inneren des äußeren Mantelrohres wird stabil vorgegeben.

Der zweite, gekröpfte Teilbereich des inneren Mantelrohres wird bevorzugt relativ kurz ausgebildet, nämlich mit einer Länge von 3 bis 20 mm, vorzugsweise 5 bis 10 mm. Die genaue Länge und der Öffnungswinkel dieses konischen Teilbereiches müssen im allgemeinen so ausgelegt werden, daß keine unerwünschten Schwingungen des Systems auftreten können. Dies hängt von den auftretenden Schwingungsfrequenzen und Beschleunigungskräften am Einbauort ab.

Besonders günstig ist es, wenn das innere Mantelrohr insgesamt eine größere Länge als die Länge des Wabenkörpers aufweist. In diesem Falle steht zumindest ein Ende des inneren Mantelrohres über ein Ende des Wabenkörpers über. Bevorzugt stehen sogar beide Enden des inneren Mantelrohres über und schützen so den eigentlichen Wabenkörper während des Transportes und vor und bei der Montages vor mechanischen Beschädigungen.

Da das innere Mantelrohr keine großen mechanischen Belastungen auszuhalten hat, kann dieses im Verhältnis zum äußeren Mantelrohr eine geringere Wanddicke als dieses aufweisen, vorzugsweise eine Wanddicke von 0,5 bis 1 mm.

Um bei der Fertigung und bei der Montage genügend Toleranzen zu haben und einen für eine thermische Entkopplung genügend großen Luftspalt zu schaffen, ist es günstig, den dritten Teilbereich mit einem so großen Innendurchmesser zu versehen, daß es etwa 1 bis 6 mm, vorzugsweise etwa 3 bis 4 mm von dem Wabenkörper beabstandet ist.

Bei einer bevorzugten Ausführungsform der Erfindung ist der dritte Teilabschnitt mit dem äußeren Mantelrohr fügetechnisch verbunden, vorzugsweise durch Schweißen. Um die Montage zu erleichtern, kann der dritte Teilbereich einen Ringwulst aufweisen, der als Anschlag beim Einschieben in ein äußeres Mantelrohr dient und anschließend mit bis zum Ringwulst geschobenen Teilstücken des äußeren Mantelrohres verschweißt wird.

Eine alternative Ausgestaltung ist es, das innere Mantelrohr noch mit einem an den dritten Teilbereich anschließenden vierten Teilbereich zu versehen, welcher etwa rechtwinklig nach außen abgeknickt ist und eine kragenartige Form hat. Ein solcher vierter Teilbereich kann in eine Flanschverbindung des äußeren Mantelrohres mit einem angrenzenden Leitungsstück einbezogen werden, wodurch sich eine besonders praktische Befestigung des Wabenkörpers mit dem inneren Mantelrohr nach Art einer Kartusche ergibt. Beim Lösen der Flanschverbindung kann auch der Wabenkörper gelöst werden und ist dadurch leicht auswechselbar.

Ausführungsbeispiele der Erfindung, auf die diese jedoch nicht beschränkt ist, sind in der Zeichnung dargestellt und zwar zeigen
- Fig. 1: einen schematischen Längsschnitt durch einen erfindungsgemäßen Wabenkörper mit innerem und äußerem Mantelrohr und
- Fig. 2: einen Längsschnitt durch einen Wabenkörper mit innerem und äußerem Mantelrohr mit zwei alternativen Ausgestaltungen des inneren Mantelrohres zur Anbindung an ein äußeres Mantelrohr.

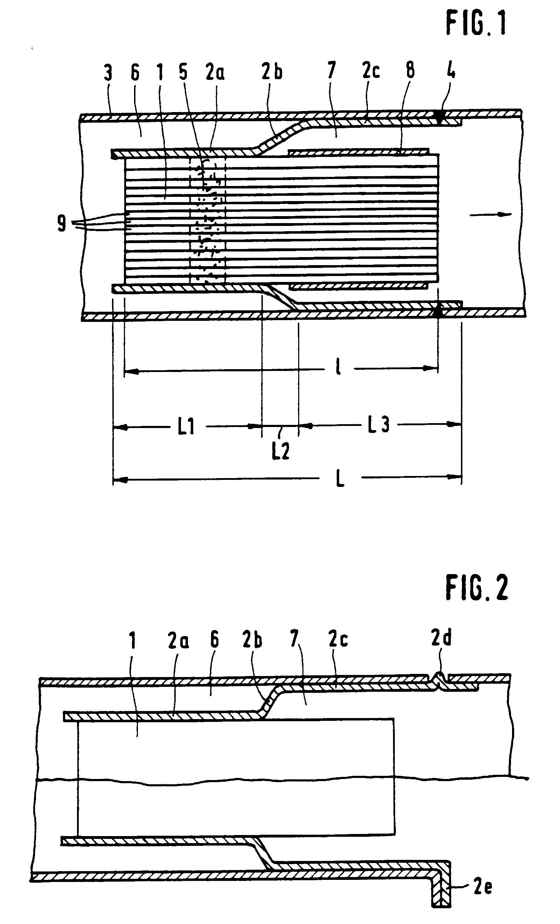

Fig. 1 zeigt einen metallischen Wabenkörper 1 mit von einem Fluid durchströmbaren Kanälen 9, mit einem inneren Mantelrohr 2a, 2b, 2c, welches in drei Teilbereiche unterteilt ist, nämlich einen an dem Wabenkörper 1 anliegenden ersten Teilbereich 2a, einen zweiten sich konisch nach außen erweiternden Teilbereich 2b und einen dritten an einem äußeren Mantelrohr 3 anliegenden Teilbereich 2c. Der erste Teilbereich 2a ist in einem gestrichelt angedeuteten streifenförmigen Bereich 5 seines inneren Umfangs mit dem Wabenkörper 1 hart verlötet, während der dritte Teilbereich 2c mittels einer Schweißverbindung 4 mit dem äußeren Mantelrohr 3 verbunden ist. Durch die besondere Form des inneren Mantelrohres 2a, 2b, 2c bildet sich ein erster Spalt 6 zwischen dem äußeren Mantelrohr 3 und dem ersten Teilbereich 2a. Außerdem bildet sich ein Spalt 7 zwischen dem Wabenkörper 1 und dem dritten Teilbereich 2c des inneren Mantelrohres 2a, 2b, 2c. Diese Spalte 6, 7 wirken als thermische Isolierung und entkoppeln daher das äußere Mantelrohr 3 und den Wabenkörper 1 thermisch. Außerdem bewirkt die erfindungsgemäße Aufhängung auch eine mechanische Entkopplung von äußerem Mantelrohr 3 und Wabenkörper 1, so daß sich bei Zug-, Torsions- oder Biegebelastungen des äußeren Mantelrohres 3 keine zusätzliche Belastung des Wabenkörpers 1 ergibt. Auch thermische Dehnungen des Wabenkörpers 1 gegenüber dem Mantelrohr 3 aufgrund unterschiedlicher Erwärmung sind nicht behindert. Bei verschiedenen Bauformen von Wabenkörpern 1 kann es vorteilhaft sein, ein zusätzliches inneres Mantelrohr 8 vorzusehen; welches den Wabenkörper zumindest in einem Teil des Bereiches umschließt, der nicht von dem ersten Abschnitt 2a des inneren Mantelrohres 2a, 2b, 2c berührt wird. Bei aus einzelnen Blechlagen strukturierter Bleche aufgebauten Wabenkörpern 1 kann so ein Auseinanderklaffen der Blechlagen überall vermieden werden. Der Wabenkörper 1 hat die Länge 1 und das innere Mantelrohr 2a, 2b, 2c hat die Gesamtlänge L, wobei der erste Teilbereich die Länge L1, der zweite Teilbereich die Länge L2 und der dritte Teilbereich die Länge L3 hat. Da die Erfindung bevorzugt für motornah eingebaute Start- oder Vorkatalysatoren einsetzbar ist, obwohl die Erfindung nicht auf diese Anwendungsfälle beschränkt ist, ist eine typische Länge 1 des Wabenkörpers etwa 100 bis 150mm bei einem Durchmesser von 70 bis 110 mm. Die Länge L des gesamten inneren Mantelrohres 2a, 2b, 2c ist im allgemeinen etwas größer als die Länge 1 des Wabenkörpers 1, so daß das innere Mantelrohr 2a, 2b, 2c an mindestens einer Seite über den Wabenkörper 1 übersteht. Typischerweise kann die Länge L1 20 bis 60 mm betragen, ebenso die Länge L3, während die Länge L2 zur Vermeidung von Schwingungen im allgemeinen kürzer ist, nämlich zwischen 2 und 20 mm. Die Breite der Spalte 6, 7 beträgt typischerweise 1 bis 6 mm, vorzugsweise etwa 3 bis 4 mm.

Fig. 2 zeigt besondere Ausbildungen des inneren Mantelrohres 2a, 2b, 2c zur Befestigung an einem äußeren Mantelrohr 3. Wie im oberen Teil der Fig. 2 gezeigt, kann der dritte Teilbereich 2c einen Ringwulst 2d aufweisen, welcher zur Festlegung der Position bei der Montage in einem äußeren Mantelrohr 3 dienen kann. Zwei Teilstücke des äußeren Mantelrohres 3 können bis zum Anschlag an diesen Ringwulst 2d geschoben und dort mit diesem verschweißt werden, wodurch eine leicht montierbare, sehr günstige Befestigung entsteht.

Eine andere Alternative zeigt der untere Teil der Fig. 2, in welcher der dritte Teilbereich 2c des inneren Mantelrohres 2a, 2b, 2c noch mit einem zusätzlichen etwa rechtwinklig abgeknickten kragenartigen vierten Teilbereich 2e versehen ist, welcher ebenfalls als Anschlag bei der Montage in einem äußeren Mantelrohr dienen kann. Dieser Kragen eignet sich insbesondere auch, um in eine Flanschverbindung, mit der das äußere Mantelrohr 3 mit einem angrenzenden Leitungsstück verbunden wird, einbezogen zu werden. Auf diese Weise bildet das innere Mantelrohr 2a, 2b, 2c, 2e zusammen mit dem Wabenkörper quasi eine auswechselbare Kartusche, welche bei Lösen der Flanschverbindung des äußeren Mantelrohres 3 mit einem benachbarten Teilstück problemlos ausgewechselt werden kann.

Die vorliegende Erfindung eignet sich insbesondere für besonders motor-nah eingebaute Start- oder Vorkatalysatoren bei Verbrennungsmotoren, welche einer hohen thermischen Wechselbelastung ausgesetzt sind und bei denen das äußere Mantelrohr zusätzlich hohe mechanische Belastungen aufnehmen muß. Die Erfindung ist allerdings nicht auf diese Anwendungsbeispiele beschränkt, sondern kann auch für andere Fälle, beispielsweise bei Hauptkatalysatoren mit Vorteil eingesetzt werden.

## Patentansprüche

1. Metallischer Wabenkörper (1), insbesondere Katalysator-Trägerkörper für Kraftfahrzeuge mit Verbrennungsmotor, mit Wänden, die eine Vielzahl von für ein Fluid durchströmbaren Kanälen (9) bilden, wobei der Wabenkörper (1) eine Länge (1) hat und in mindestens einem inneren (2a, 2b, 2c) und mit radialem Abstand in einem äußeren (3) Mantelrohr angeordnet und gehaltert ist,
dadurch gekennzeichnet,
daß das innere Mantelrohr (2a, 2b, 2c) insgesamt eine größere Länge (L) als die Länge (l) des Wabenkörpers aufweist und in mindestens drei Teilbereiche unterteilt ist, nämlich einen ersten (2a) im wesentlichen nur entlang eines Teilstückes der Länge (1) des Wabenkörpers (1) an diesem außen anliegenden Teilbereich, einen zweiten (2b) sich konisch erweiternden Teilbereich und einen dritten (2c) innen an dem äußeren Mantelrohr (3) anliegenden Teilbereich.

2. Wabenkörper nach Anspruch 1, dadurch gekennzeichnet, daß das innere Mantelrohr (2a, 2b, 2c) in dem ersten Teilbereich (2a) mit dem Wabenkörper (1) durch Hartlöten verbunden ist, und zwar in einer mindestens 1 cm breiten Zone (5) seines inneren Umfanges.

3. Wabenkörper nach Anspruch 1 oder 2, dadurch gekennzeichnet, daß der dritte Teilbereich (2c) zumindest eine Länge (L3) von mehr als 10 mm hat, vorzugsweise mehr als ein Drittel der Länge (1) des Wabenkörpers.

4. Wabenkörper nach einem der vorhergehenden Ansprüche, dadurch gekennzeichnet, daß der zweite Teilbereich (2b) eine Länge (L2) von 2 bis 20 mm hat, vorzugsweise 5 bis 10 mm.

5. Wabenkörper nach einem der vorhergehenden Ansprüche, dadurch gekennzeichnet, daß der erste Teilbereich (2a) mindestens eine Länge (L1) hat, die größer als ein Drittel der Länge (1) des Wabenkörpers (1) ist, vorzugsweise etwa die Hälfte dieser Länge (1).

6. Wabenkörper nach einem der vorhergehenden Ansprüche, dadurch gekennzeichnet, daß der erste Teilbereich (2a) über ein Ende des Wabenkörpers (1) übersteht.

7. Wabenkörper nach einem der vorhergehenden Ansprüche, dadurch gekennzeichnet, daß das innere Mantelrohr (2a, 2b, 2c) eine geringere Wanddicke hat als das äußere Mantelrohr (3), vorzugsweise eine Wanddicke von 0,5 bis 1 mm.

8. Wabenkörper nach einem der vorhergehenden Ansprüche, dadurch gekennzeichnet, daß der dritte Teilbereich (2c) etwa 1 bis 6 mm vom Wabenkörper (1) beabstandet ist, vorzugsweise etwa 3 bis 4 mm.

9. Wabenkörper nach einem der vorhergehenden Ansprüche, dadurch gekennzeichnet, daß der dritte Teilbereich (2c) mit dem äußeren Mantelrohr (3) fügetechnisch verbunden (6) ist, vorzugsweise durch Schweißen.

10. Wabenkörper nach einem der vorhergehenden Ansprüche, dadurch gekennzeichnet, daß der dritte Teilbereich (2c) einen Ringwulst (2d) aufweist, welcher formschlüssig in eine Nut oder einen Spalt des äußeren Mantelrohres (3) eingreift und mit diesem verschweißt ist.

11. Wabenkörper nach einem der Ansprüche 1 bis 8, dadurch gekennzeichnet, daß sich an den dritten Teilbereich (2c) ein nach außen etwa rechtwinklig abgeknickter, kragenartiger vierter Teilbereich (2e) anschließt, der in eine Flanschverbindung des äußeren Mantelrohres (3) mit einem angrenzenden Leitungsstück einbezogen ist.

12. Wabenkörper nach einem der vorhergehenden Ansprüche, dadurch gekennzeichnet, daß zumindest ein Teil des nicht eng von dem inneren Mantelrohr (2a, 2b, 2c) umschlossenen Bereiches des Wabenkörpers (1) mit einem zweiten inneren Mantelrohr (8) versehen ist.

## Claims

1. A metallic honeycomb body (1), in particular a catalyst carrier body for motor vehicles with an internal combustion engine, having walls forming a plurality of passages (9) through which a fluid can flow, wherein the honeycomb body (1) is of a length (1) and is arranged and held in at least an inner (2a, 2b, 2c) tubular casing and at a radial spacing in an outer tubular casing (3), characterised in that the inner tubular casing (2a, 2b, 2c) is overall of a greater length (L) than the length (1) of the honeycomb body and is subdivided into at least three portions, namely a first portion (2a) which bears against the honeycomb body (1) on the outside thereof substantially only along a part of the length (1) of the honeycomb body (1), a second conically enlarging portion (2b) and a third portion (2c) which bears against the outer tubular casing (3) at the inside thereof.

2. A honeycomb body according to claim 1 characterised in that the inner tubular casing (2a, 2b, 2c) is connected to the honeycomb body (1) by brazing in the first portion (2a), more specifically in a zone (5) of its inside periphery, which is at least 1 cm wide.

3. A honeycomb body according to claim 1 or claim 2 characterised in that the third portion (2c) is at least of a length (L3) of more than 10 mm, preferably more than a third of the length (1) of the honeycomb body.

4. A honeycomb body according to one of the preceding claims characterised in that the second portion (2b) is of a length (L2) of 2 to 20 mm, preferably 5 to 10 mm.

5. A honeycomb body according to one of the preceding claims characterised in that the first portion (2a) is at least of a length (L1) which is greater than a third of the length (1) of the honeycomb body (1), preferably approximately half that length (1).

6. A honeycomb body according to one of the preceding claims characterised in that the first portion (2a) projects beyond an end of the honeycomb body (1).

7. A honeycomb body according to one of the preceding claims characterised in that the inner tubular casing (2a, 2b, 2c) is of a thinner wall thickness than the outer tubular casing (3) and is preferably of a wall thickness of 0.5 to 1 mm.

8. A honeycomb body according to one of the preceding claims characterised in that the third portion (2c) is spaced from the honeycomb body (1) by about 1 to 6 mm and preferably about 3 to 4 mm.

9. A honeycomb body according to one of the preceding claims characterised in that the third portion (2c) is connected (b) to the outer tubular casing (3) by a procedure involving the fusion of materials, preferably by welding.

10. A honeycomb body according to one of the preceding claims characterised in that the third portion (2c) has an annular bead (2d) which positively lockingly engages into a groove or a gap in the outer tubular casing (3) and is welded to the latter.

11. A honeycomb body according to one of claims 1 to 8 characterised in that adjoining the third portion (2c) is a collar-like fourth portion (2e) which is bent over outwardly approximately at a right angle and which is included in a flange connection between the outer tubular casing (3) and an adjoining conduit portion.

12. A honeycomb body according to one of the preceding claims characterised in that at least a part of the region of the honeycomb body (1), which is not closely enclosed by the inner tubular casing (2a, 2b, 2c), is provided with a second inner tubular casing (8).

## Revendications

1. Corps alvéolaire métallique (1), notamment corps support de catalyseur pour des véhicules automobiles à moteur à combustion interne, avec des parois qui forment de nombreux canaux (9) pouvant être traversés par un fluide, le corps alvéolaire (1) ayant une longueur (1) et étant agencé et fixé dans au moins un tube protecteur intérieur (2a, 2b, 2c) et, à une certaine distance radiale, dans un tube protecteur extérieur (3),
caractérisé en ce que
le tube protecteur intérieur (2a, 2b, 2c) a au total une longueur (L) supérieure à la longueur (1) du corps alvéolaire et est subdivisé en au moins trois parties, à savoir une première partie (2a) globalement seulement le long d'un tronçon de la longueur (1) du corps alvéolaire (1) et adjacente à l'extérieur de celui-ci, une deuxième partie (2b) s'élargissant en cône et une troisième partie (2c) adjacente à l'intérieur du tube protecteur extérieur (3).

2. Corps alvéolaire selon la revendication 1, caractérisé en ce que le tube protecteur intérieur (2a, 2b, 2c) dans la première partie (2a) est fixée par brasage fort au corps alvéolaire (1), et ce dans une zone (5), large d'au moins 1 cm, de sa circonférence intérieure.

3. Corps alvéolaire selon la revendication 1 ou 2, caractérisé en ce que la troisième partie (2c) a au moins une longueur (L3) de plus de 10 mm, de préférence de plus d'un tiers de la longueur (1) du corps alvéolaire.

4. Corps alvéolaire selon l'une des revendications précédentes, caractérisé en ce que la deuxième partie (2b) a une longueur (L2) de 2 à 20 mm, de préférence de 5 à 10 mm.

5. Corps alvéolaire selon l'une des revendications précédentes, caractérisé en ce que la première partie (2a) a au moins une longueur (L1) qui est supérieure à un tiers de la longueur (1) du corps alvéolaire (1), de préférence environ égale à la moitié de cette longueur (1).

6. Corps alvéolaire selon l'une des revendications précédentes, caractérisé en ce que la première partie (2a) dépasse d'une extrémité du corps alvéolaire (1).

7. Corps alvéolaire selon l'une des revendications précédentes, caractérisé en ce que le tube protecteur intérieur (2a, 2b, 2c) a une épaisseur de paroi inférieure au tube protecteur extérieur (3), de préférence une épaisseur de paroi comprise entre 0,5 et 1 mm.

8. Corps alvéolaire selon l'une des revendications précédentes, caractérisé en ce que la troisième partie (2c) se trouve à une certaine distance, comprise entre 1 et 6 mm environ, de préférence entre 3 et 4 mm environ, du corps alvéolaire (1).

9. Corps alvéolaire selon l'une des revendications précédentes, caractérisé en ce que la troisième partie (2c) est fixée (6) au tube protecteur extérieur (3) par une technique d'assemblage, de préférence par soudure.

10. Corps alvéolaire selon l'une des revendications précédentes, caractérisé en ce que la troisième partie (2c) comporte un tore (2d) qui pénètre par sa forme dans une rainure ou fente du tube protecteur extérieur (3) et qui est soudé à celui-ci.

11. Corps alvéolaire selon l'une des revendications 1 à 8, caractérisé en ce que la troisième partie (2c) est suivie par une quatrième partie (2e), flambée sensiblement perpendiculairement comme un collet, qui est intégrée dans un joint à brides assemblant le tube protecteur extérieur (3) et un morceau adjacent de conduit.

12. Corps alvéolaire selon l'une des revendications précédentes, caractérisé en ce qu'au moins une partie de la zone du corps alvéolaire (1) qui n'est pas enfermée étroitement par le tube protecteur intérieur (2a, 2b, 2c) est munie d'un deuxième tube protecteur intérieur (8).
